# EUROPEAN PATENT SPECIFICATION

(11) **EP 1 865 590 B1**
(45) Date of publication and mention of the grant of the patent: **02.08.2017**
(21) Application number: 07252243.6
(22) Date of filing: 02.06.2007
(51) Int. Cl.: H02K 7/06, B64C 13/42, B64C 13/50, F16H 25/20, F16H 21/02, F16H 25/22, H02K 16/00

(54) **Actuator arrangement**
Aktuatoranordnung
Agencement d'actionneur

(30) Priority: 10.06.2006 GB 0611525
(43) Date of publication of application: 12.12.2007
(73) Proprietor: Goodrich Actuation Systems SAS, 78530 Buc (FR)
(72) Inventor: Gerbier, Dominique, 91620 La Ville du Bois (FR); Sandler, Samuel, 78150 Le Chesnay (FR); Grand, Serge, 91140 Villebon sur Yvette (FR); Dubois Robert, 13090 Aix en Provence (FR)
(74) Representative: Leckey, David Herbert

(56) References cited:
- US-A- 3 269 676
- US-A- 3 509 435
- US-A- 4 370 706
- US-A- 4 967 124
- US-A1- 2004 075 019

## Description

The invention relates to an actuator arrangement, for example for use in aerospace applications, but which could also be used in other applications. The invention relates, in particular, to a linear actuator arrangement suitable for use with electrically operated actuators.

The use of hydraulically driven linear actuators in aerospace applications is well known, but has the disadvantage that hydraulic fluid under pressure has to be supplied to each location in which an actuator is provided, and this is inconvenient. Rather than use hydraulically driven actuators, arrangements are also known in which electrically driven linear actuators are used. The use of such actuators has the advantage that the necessity to supply hydraulic fluid under pressure to the actuator location is avoided. One form of electrically powered linear actuator is described in EP1548327. US 2004/075019 A1 discloses a flight control surface actuation system with a plurality of actuators capable of compensating if one of said actuators malfunctions. US 4967124A discloses a servo control apparatus wherein a load is controlled by a deviation between a command signal corresponding to a target value and a detected position signal of an actuator of a servo system.

It is desirable to be able to provide an actuator arrangement in which there is sufficient redundancy that, in the event of the failure of an individual actuator, a flight control surface or other component which would usually be driven by that actuator can still be driven, for example using other actuators. This may be achieved, for example, by providing two or more actuators in each location in which an actuator arrangement is required, each individual actuator being capable of driving the flight control surface or other component in the event of the failure of the other actuator. However, such arrangements result in relatively large actuators being used, and this adds to the cost and weight of the actuator arrangement.

According to the invention there is provided an actuator arrangement as defined in claim 1.

The first and second actuators are preferably electrically driven actuators.

Such an arrangement is advantageous in that, in normal use, each linear actuator needs only supply part of the overall required output force of the actuator arrangement. In the event of the failure of one of the actuators or the associated control arrangement, continued operation of the other of the actuators results in the link pivoting about the point of connection with the failed actuator and, as the output connection is located intermediate the points at which the failed and operating actuators are connected to the link, it will be appreciated that the resulting leverage results in the remaining operating actuator still needing to be capable of providing only part of the required output force of the actuator arrangement. Redundancy can thus be attained in a relatively simple and convenient manner.

Conveniently, the first and second actuators are capable of providing substantially the same output force as one another, and the location of the output connection is preferably approximately midway between the locations of the pivotal connections of the first and second outputs with the link. Such an arrangement is advantageous in that the same output force can be attained irrespective of whether both or only one of the actuators is operating.

The first and second actuators preferably include brake means. In the event of the failure of one of the actuators, the corresponding brake means is conveniently applied to ensure that the point about which the link pivots remains fixed or substantially fixed.

The pivotal connections between the first and second output shafts and the link are conveniently spherical pivot connections, and are also preferably capable of accommodating lateral movement of the link. The provision of spherical type pivot arrangements reduces the risk of the actuator arrangement becoming jammed, in use, and the ability to accommodate lateral movement accommodates changes in the spacing of the pivotal connections to the link as occur when the link undergoes pivoting movement.

The actuator arrangement conveniently includes a control arrangement adapted to compare the statuses of the first and second actuators, and to adjust the operating speeds thereof, in normal use, to limit or avoid tilting movement of the link.

The invention will further be described, by way of example, with reference to the accompanying drawings, in which:
Figures 1 and 2 are diagrammatic views illustrating an actuator arrangement in accordance with an embodiment of the invention in normal use and in the event of the failure of one of the actuators thereof, respectively;
Figure 3 is a sectional view illustrating part of the actuator arrangement;
Figure 4 is a diagram illustrating part of a control arrangement for the actuator arrangement; and
Figure 5 is a diagram illustrating some operating modes of the actuator arrangement.

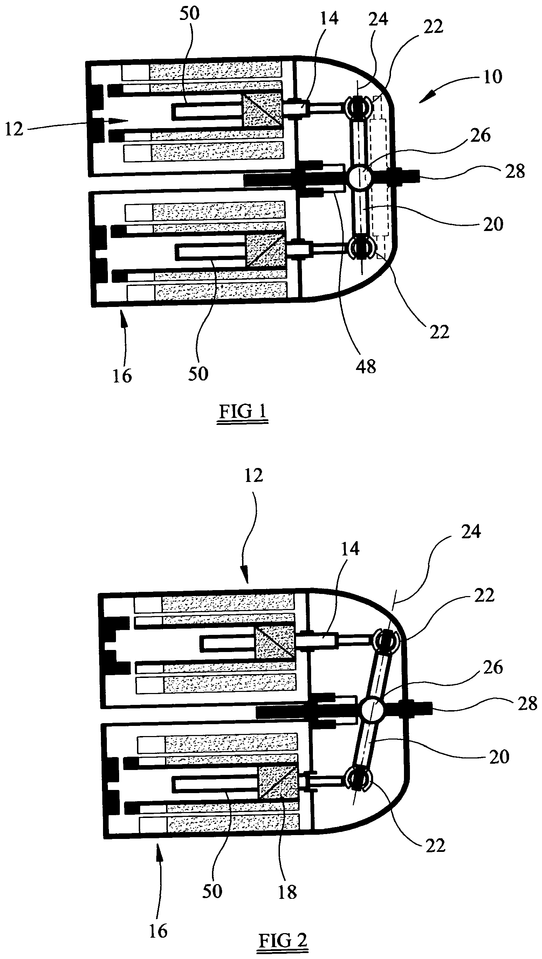

Referring firstly to Figures 1 to 3 there is shown a linear actuator arrangement 10 comprising a first electrically driven linear actuator 12 having a first output shaft 14, and a second electrically driven linear actuator 16 having a second output shaft 18. The first and second actuators 12, 16 are substantially identical to one another, and are arranged so as to be parallel to one another, the output shafts 14, 18 lying parallel to one another and spaced apart from one another. Each actuator conveniently incorporates a brake assembly which preferably locks the respective actuator in position when electrical power to the actuator is removed.

A link 20 interconnects the output shafts 14, 18, the link 20 being pivotally connected to the output shafts 14, 18, conveniently by spherical pivot arrangements 22. The pivot arrangements 22 are designed in such a manner as to allow pivoting movement to occur between the shafts 14, 18 and the link 20, and in addition to allow some sliding movement to occur therebetween in the direction of the axis 24 of the link 20.

Midway along the length of the link 20 is provided a pivotable output connection 26 whereby an output shaft 28 is pivotally connected to the link 20. The output connection 26, like the arrangements 22, is in the form of a spherical pivot arrangement. However, it is designed in such a manner that sliding movement in the direction of the axis 24 of the link 20 is not permitted.

In normal use, when it is desired to move the output shaft 28 to an extended position, the first and second actuators 12, 16 are both driven to cause linear movement of the respective output shafts 14, 18 to occur. The actuators 12, 16 are controlled in such a manner that the shafts 14, 18 are driven simultaneously at substantially the same speed and by substantially the same distance. It will be appreciated that such operation of the actuators 14, 18 causes the link 20 to translate, for example to the position shown in broken lines in Figure 1, the motion of the link 20 being transmitted through the output connection 26 to cause linear, axial movement of the output shaft 28. It will be appreciated that in this mode of operation, no or minimal tilting or pivotal movement occurs between the output shafts 14, 18 and the link 20 and, similarly, no or minimal tilting or pivotal movement occurs between the link 20 and the output shaft 28. If the output shaft 28 is required to move through a distance D, applying a load F to a component, for example a flight control surface, connected thereto, it will be appreciated that the output shafts 14, 18 of the first and second actuators 12, 16 must both move through the distance D and each must contribute a force of F/2 to the total output force.

Figure 2 illustrates the situation where the first actuator 12 or the control arrangement associated therewith has failed with the output shaft 14 thereof in its extended position. The second actuator 16 is still fully functioning. In the position illustrated in Figure 2, the output shaft 28 is in an intermediate position. If it is desired to move the output shaft 28 to a more extended position, the second actuator 16 is operated to move the output shaft 18 thereof towards its extended position. As mentioned hereinbefore, the first actuator 12 has failed, and thus the output shaft 14 thereof will remain in a fixed position. As the first actuator 12 will bear significant loadings, it may be desired to provide a brake arrangement or assembly which can be actuated to lock the first actuator against movement, as mentioned hereinbefore. It will be appreciated that in this mode of operation, the movement of the second output shaft 18 will cause the link 20 to pivot about the arrangement 22 whereby the link 20 is pivotally connected to the first output shaft 14. As the output shaft 28 is pivotally connected to the link 20, it will be appreciated that such movement results in the output shaft 28 moving, as desired. Further, as the output shaft 28 is secured to the link 20 at a point midway between the locations of the two arrangements 22, it will be appreciated that due to mechanical advantage or leverage effects, even though the force applied by the single functioning actuator 16 is only F/2 (as mentioned hereinbefore), the force exerted upon the output shaft 28 is still F, as when both actuators are operating. Although the output force of the actuator arrangement 10 is maintained despite one of the actuators failing, it will be appreciated that in order for the output shaft 28 to move through a distance D, the output shaft 18 of the functioning actuator 16 will need to be moved through an increased distance of 2D, and for a given speed of operation of the actuator 16, the output shaft 28 may be moved more slowly than when both actuators are functioning, although the manner in which the actuator arrangement 10 is controlled may be used to compensate for this.

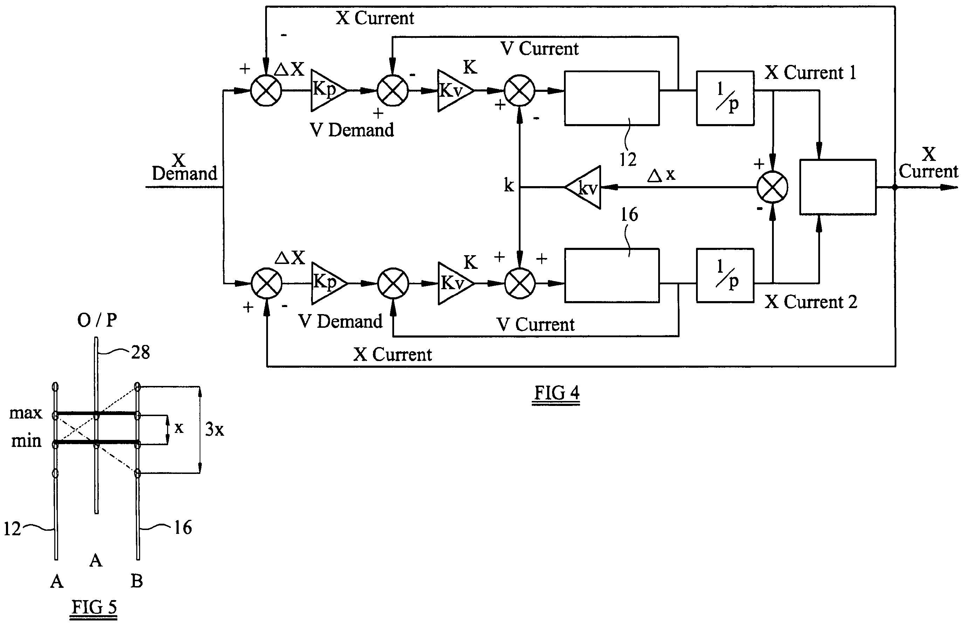

To ensure that the output shaft 28 is able to move through its full normal operating range of movement, identified as x in Figure 5, irrespective of the position in which one or other of the actuators 12, 16 occupies at the time of failure, each of the actuators 12, 16 is preferably capable of extending over a distance 3x, again as identified in Figure 5, as described below. As shown in Figure 5, during normal operation both actuators 12, 16, and the output shaft 28 extend and retract over a distance x between the positions identified as min and max. In the event of the failure of the first actuator 12 when the output shaft 28 is in the max position, the second actuator 16 would need to retract from the max position through a distance 2x in order to move the output shaft 28 through a distance x to the min position. If the failure had occurred with the output shaft 28 in the min position, the second actuator would need to extend from the min position through a distance of 2x to move the output shaft 28 to the max position. Clearly, therefore, each actuator 12, 16 must be capable of extending/retracting over a distance x each side of the normal operating range x, giving a total required range of movement of 3x. In the event that it is sensed that the actuator shaft of one or other of the actuators is located outside of the normal range of movement, then this can be used to provide an indication that one of the actuators has failed. The brake assembly associated with the failed actuator can then be applied and the remaining functioning actuator used to drive the output shaft 28 through its normal operating range of movement.

It will be appreciated that, when the actuator arrangement operates in the mode described with reference to Figure 2, the distance between the arrangements 22 varies as the functioning actuator 16 is operated. In order to accommodate this, as described hereinbefore, the arrangements 22 are conveniently designed to allow some movement of the link 20 in the direction of its axis 24.

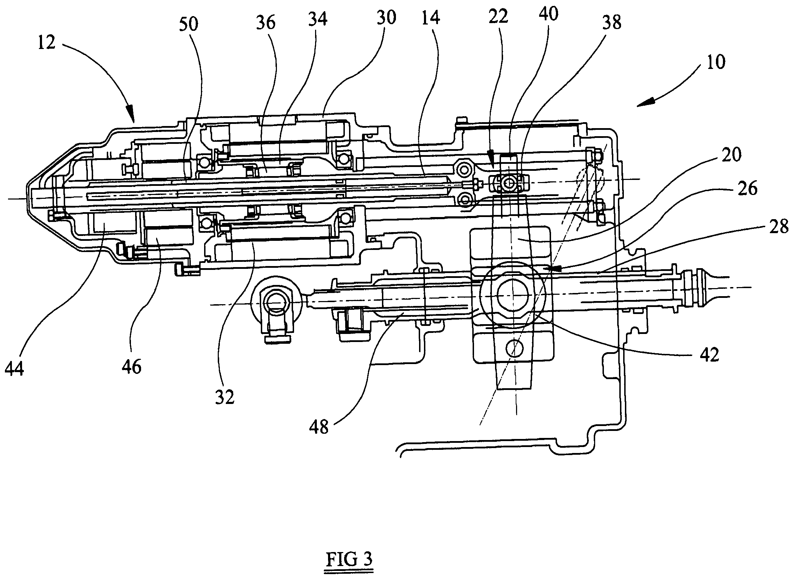

Turning to Figure 3, parts of the actuator arrangement 10 are illustrated in greater detail. The actuators 12, 16 are conveniently of concentric form, for example as described and illustrated in EP1548327, each comprising a housing 30 containing an electrically operable motor 32 arranged to drive a tubular drive shaft 34 for rotation. Secured to the drive shaft 34 is a nut 36, the nut 36 being mounted for rotation through bearings, but being secured against axial movement. The nut 36 cooperates with threads formed on the output shaft 14, 18. The output shaft is mounted so as to be axially moveable, but rotation thereof is prevented or restricted. Operation of the motor 32 to drive the nut 36 for rotation causes linear movement of the output shaft 14, 18 to occur.

The cooperation between the nut 36 and the output shaft 14, 18 is conveniently through a ball or roller-screw type coupling, but other threaded connections could be used.

Each actuator 12, 16 incorporates a brake arrangement 44 operable to secure the associated output shaft 14, 18 against axial movement. The brake arrangement 44 may comprise a permanent magnet operated brake which is disengaged, in normal use, by the application of an electric current to an associated actuator.

The arrangement 22 formed at the outer end of each output shaft 14, 18 comprises a coupling member 38 pivotally connected to the associated output shaft. The coupling member 38 has an opening formed therein through which a rod-like part 40 of the link 20 passes, the part 40 being slidable within the opening. It will be appreciated that such arrangements 22 accommodate pivoting movement between the link 20 and the associated output shaft 14, 18, and also that sliding movement of the link 20 in the direction of its axis 24 is accommodated with the benefits described hereinbefore. The output connection 26 is of similar form, including a coupling member 42 rotatable within a part spherical recess, but sliding movement between the link 20 and the output shaft 28 is not permitted.

Figure 4 illustrates part of a control arrangement for use with the actuator arrangement described hereinbefore. In this arrangement, for each actuator, an input signal Xdemand representative of the desired position of the output shaft 28 is compared with a signal Xcurrent representative of the actual output shaft position. Xcurrent may be derived from appropriate sensors associated with the output shaft 28, for example from LVDT 48. The comparison operation results in the derivation of a signal ΔX representative of the difference between the actual and desired output shaft positions. The signal ΔX is converted to a desired actuator speed signal Vdemand which is compared with a signal Vcurrent representative of the current operating speed of the actuator to produce a difference signal ΔV which is converted to command signal K. The current positions of each actuator, Xcurrent1 and Xcurrent2 (derived from respective LVDT sensors), are compared to produce a signal Δx representative of the difference in actuator position, signal Δx being used to produce a command signal k which is used in combination with the corresponding command signal K to control the operation of each actuator. In normal use, the control arrangement will control the operation of the actuator arrangement such that substantially no tilting or pivotal movement of the link 20 occurs. If the signal Δx exceeds a predetermined threshold, then the system will automatically assume that one of the actuators has failed, and will apply the brake arrangement associated with that one of the actuators. Further, if it is sensed that one of the actuators has moved to a position outside of the normal operating range of movement thereof, as mentioned hereinbefore, then the control system will assume that an actuator has failed and control the further operation of the actuator arrangement accordingly. The remaining functioning actuator can be operated at a higher speed, for example at double the normal operating speed, to maintain substantially normal operation of the flight control surface or other component with which the actuator arrangement is used.

The current positions of the actuators are conveniently sensed using LVDT sensors 50. Resolvers 46 are provided in the actuators 12, 16 for sensing to the actuator speed, the resolvers using, for example, the Hall effect to monitor changes in the magnetic field strength and thereby determine the positions of the output shafts 14, 18 of the actuators 12, 16. Alternatively, or additionally, other sensors, for example LVDTs may be used to sense the positions of the actuators.

Although the arrangement described hereinbefore makes use of two identical actuators with the output shaft 28 connected to the link 20 midway between the actuators, arrangements may be possible in which the actuators are different and/or in which the connection of the output shaft 28 to the link 20 is other than midway between the actuators. A number of other modifications and alterations are also possible without departing from the scope of the invention as defined by the appended claims.

## Claims

1. An actuator arrangement comprising a first linear actuator (12) having a first output shaft (14), a second linear actuator (16) having a second output shaft (18), the first and second output shafts (14, 18) being pivotally connected to a link (20), a pivotable output connection (26) provided on the link (20) intermediate the locations at which the first and second output shafts (14, 18) are pivotally connected to the link (20), wherein in normal use, each linear actuator (12, 16) needs only supply part of the overall required output force of the actuator arrangement, while in the event of the failure of one of the actuators (12, 16) or the associated control arrangement, continued operation of the other of the actuators (12, 16) results in the link (20) pivoting about the point of connection with the failed actuator (12, 16), **characterised by** a control arrangement adapted to compare the statuses of the first and second actuators (14, 18), and to adjust the operating speeds thereof, in normal use, to limit or avoid tilting movement of the link (20).

2. An actuator arrangement according to Claim 1, wherein the first and second actuators (12, 16) are electrically driven actuators (112, 16).

3. An actuator arrangement according to Claim 1 or Claim 2, wherein the first and second actuators (12, 16) are capable of providing substantially the same output force as one another.

4. An actuator arrangement according to any of the preceding claims, wherein the location of the output connection (26) is approximately midway between the locations of the pivotal connections of the first and second outputs (14, 18) with the link (20).

5. An actuator arrangement according to any of the preceding claims, wherein the first and second actuators (12, 16) include brake means (40).

## Patentansprüche

1. Aktuatoranordnung, die Folgendes umfasst:
einen ersten linearen Aktuator (12), der eine erste Ausgangswelle (14) aufweist,
einen zweiten linearen Aktuator (16), der eine zweite Ausgangswelle (18) aufweist, wobei die erste und die zweite Ausgangswelle (14, 18) schwenkbar mit einem Verbindungselement (20) verbunden sind,
eine auf dem Verbindungselement (20) bereitgestellte schwenkbare Ausgangsverbindung (26), die sich zwischen den Stellen befindet, an denen die erste und die zweite Ausgangwelle (14, 18) schwenkbar mit dem Verbindungselement (20) verbunden sind,
wobei jeder lineare Aktuator (12, 16) bei normaler Verwendung nur einen Versorgungsteil der insgesamt erforderlichen Ausgangskraft der Aktuatoranordnung benötigt, während im Fall des Ausfalls eines der Aktuatoren (12, 16) oder der zugehörigen Steueranordnung ein Weiterbetrieb des anderen der Aktuatoren (12, 16) zum Schwenken des Verbindungselements (20) um den Verbindungspunkt mit dem ausgefallenen Aktuator (12, 16) führt,
**gekennzeichnet durch** eine Steueranordnung, die geeignet ist, den Status der ersten und der zweiten Ausgangswelle (14, 18) zu vergleichen und deren Betriebsgeschwindigkeiten bei normaler Verwendung anzupassen, um eine Kippbewegung des Verbindungselementes (20) zu begrenzen oder zu verhindern.

2. Aktuatoranordnung nach Anspruch 1, wobei der erste und der zweite Aktuator (12, 16) elektrisch angetriebene Aktuatoren (112, 16) sind.

3. Aktuatoranordnung nach Anspruch 1 oder Anspruch 2, wobei der erste und der zweite Aktuator (12, 16) fähig sind, im Wesentlichen dieselbe Ausgangskraft wie der jeweils andere bereitzustellen.

4. Aktuatoranordnung nach einem der vorhergehenden Ansprüche, wobei sich die Stelle der Ausgangsverbindung (26) annähernd in der Mitte zwischen den Stellen der Schwenkverbindung des ersten und des zweiten Ausgangs (14, 18) mit dem Verbindungselement (20) befindet.

5. Aktuatoranordnung nach einem der vorhergehenden Ansprüche, wobei der erste und der zweite Aktuator (12, 16) Bremsmittel (40) einschließen.

## Revendications

1. Agencement d'actionneur comprenant un premier actionneur linéaire (12) ayant un premier arbre de sortie (14), un second actionneur linéaire (16) ayant un second arbre de sortie (18), les premier et second arbres de sortie (14, 18) étant connectés de manière pivotante à une liaison (20), une connexion de sortie pivotante (26) fournie sur la liaison (20) entre les emplacements au niveau desquels les premier et second arbres de sortie (14, 18) sont connectés de manière pivotante à la liaison (20), dans lequel en utilisation normale, chaque actionneur linéaire (12, 16) a besoin uniquement d'une partie d'alimentation en la force de sortie requise globale de l'agencement d'actionneur, tandis qu'en cas de défaut de l'un des actionneurs (12, 16) ou de l'agencement de commande associé, un fonctionnement continu de l'autre des actionneurs (12, 16) résulte dans le fait que la liaison (20) pivote autour du point de connexion avec l'actionneur défaillant (12, 16), **caractérisé par** un agencement de commande adapté pour comparer les états des premier et second actionneurs (14, 18), et pour ajuster les vitesses de fonctionnement de ceux-ci, en utilisation normale, pour limiter ou éviter un mouvement d'inclinaison de la liaison (20).

2. Agencement d'actionneur selon la revendication 1, dans lequel les premier et second actionneurs (12, 16) sont des actionneurs à entraînement électrique (112, 16).

3. Agencement d'actionneur selon la revendication 1 ou la revendication 2, dans lequel les premier et second actionneurs (12, 16) sont capables de fournir sensiblement la même force de sortie l'un que l'autre.

4. Agencement d'actionneur selon l'une quelconque des revendications précédentes, dans lequel l'emplacement de la connexion de sortie (26) se trouve approximativement à mi-chemin entre les emplacements des connexions pivotantes des première et seconde sorties (14, 18) avec la liaison (20).

5. Agencement d'actionneur selon l'une quelconque des revendications précédentes, dans lequel les premier et second actionneurs (12, 16) comprennent un moyen de freinage (40).
